# EUROPEAN PATENT APPLICATION

(11) **EP 2 738 686 A1**
(43) Date of publication of application: **04.06.2014**
(21) Application number: 12306481.8
(22) Date of filing: 29.11.2012
(51) Int. Cl.: G06F 17/30

(54) **Synchronization of different versions of a multimedia content**

(71) Applicant: Thomson Licensing, 92130 Issy-les-Moulineaux (FR)
(72) Inventor: Duong, Quang-Khanh-Ngoc, 35576 Cesson Sévigné (FR); Thudor, Franck, 35576 Cesson Sévigné (FR)
(74) Representative: Huchet, Anne

(57) **Abstract**

This method for synchronizing two versions (4,6) of a multimedia content, each version (4,6) comprising a plurality of video frames, comprises steps of:
a) extracting (20) audio fingerprints from each version (4,6) of the multimedia content;
b) analyzing (24,26,28) the extracted audio fingerprints in order to determine at least one temporal matching period between both versions (4,6);
c) exploiting (30,32) the determined temporal matching period to perform a mapping (34) between the video frames of both versions (4,6).

## Description

### FIELD OF THE INVENTION

The present invention generally relates to the synchronization of multimedia contents.

More particularly, the invention deals with the synchronization of different versions of a multimedia content like a video content, for example a movie.

Thus, the invention concerns a method and a device for synchronizing two versions of a multimedia content. It also concerns a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Nowadays, many versions of a video content, as a movie, may coexist. An example is the successive DVD versions of a blockbuster that can be found a couple of years after the theatrical one in extended version or in director's cut version. Other examples range from old movies brought up to date with new additional visual effects or in a colorized version, to "cleaned up" versions, due to local censure, from which violent, religious, sexual, political scenes are removed. Temporal editions that can occur between those versions include frame addition or deletion and scene re-ordering.

Thus, there is a need for a movie synchronization method which aims at synchronizing multiple versions of the same movie with an objective of transferring some metadata available in a first version into a second version where those metadata are absent. Such metadata may come from an artistic work, e.g. subtitles or chapters, but they may also be generated through a computational analysis of the audio-video content itself, e.g. characters present, scene analysis, etc.. In both cases, transferring directly the metadata from one version to the other avoids a long and hard task of metadata re-generation.

There exists in the literature methods related to the audio/video recordings synchronization problem, for example in the paper of N. Bryan, P. Smaragdis, and G. J. Mysore, "Clustering and synchronizing multi-camera video via landmark cross-correlation," Proc. ICASSP, 2012. In this paper, landmark-based audio fingerprinting is used to match multiple recordings of the same event together.

However, the teachings of the previously cited paper are not applicable to the synchronization problem considered here, as they do not take into account frame additions and deletions as well as frame reordering, which usually happen in different versions of a movie.

In order to deal with the frame addition/deletion efficiently, Dynamic Time Warping (DTW) is typically applied to find the best alignment path between two audio pieces. This is described, for example, in the paper of R. Macrae, X. Anguera, and N. Oliver, "MUVISYNC: Realtime music video alignment," Proc. ICME, 2010. However, the cost of computation of DTW does not scale efficiently for long signals as it is very high for such signals, and the frame reordering problem cannot be handled due to the monotonicity condition of DTW. Moreover, standard DTW requires knowledge of both start point and end point of the audio sequences to be aligned, which is not a trivial information, in order to estimate an optimal path.

### SUMMARY OF THE INVENTION

The present invention proposes a solution for improving the situation.

Accordingly, the present invention provides a method for synchronizing two versions of a multimedia content, each version comprising a plurality of video frames, said method comprising steps of:
a) extracting audio fingerprints from each version of the multimedia content;
b) analyzing the extracted audio fingerprints in order to determine at least one temporal matching period between both versions;
c) exploiting the determined temporal matching period to perform a mapping between the video frames of both versions.

By using only audio streams by an audio fingerprinting technique, the method of the present invention provides a robust, computationally inexpensive and easy to implement mechanism to perform frame accurate synchronization of multiple versions of the same multimedia content, such as a movie.

Furthermore, the robustness of the audio fingerprinting technique permits an accurate synchronization even if both versions have a different audio and/or video quality and/or have been coded and/or distorted differently.

Besides, the determination of the temporal matching periods between the versions permits to detect the cases of frame addition, deletion and reordering, rendering the synchronization method robust in all situations.

Advantageously, the extracting step comprises a step of transforming time-domain audio signals of both versions into a time-frequency representation.

Preferably, the step of transforming uses short-time Fourier transform, STFT.

The use of STFT is advantageous as it permits a quick extraction of a robust feature which is the energy peak location in the time-frequency representation.

Advantageously, the analyzing step comprises a step of matching the extracted audio fingerprints of both versions using Shazam's algorithm.

The Shazam's algorithm is well known for its robustness. It is described in the paper of A. L. Wang, "An Industrial-Strength Audio Search Algorithm," Proc. Int. Sym. on Music Information Retrieval (ISMIR), pp. 1-4, 2003.

Advantageously, the step of matching comprises a step of computing a histogram representing a number of matches as a function of a difference of time offsets between both versions.

The computed histogram permits a good visualization of the matching between the versions.

Preferably, at least one temporal matching period is determined using a thresholding of the computed histogram.

Such thresholding, using a heuristically chosen threshold depending on the fingerprint density, i.e. the approximate number of extracted fingerprints per second, and the durations of the matching periods between two versions, or a threshold learnt from training data, permits to identify maximum peaks in the histogram. Contrarily to Shazam's algorithm which searches for only one maximum peak, more than one peak may be identified according to the preferred embodiment of the present invention. The identification of a plurality of peaks enables the detection of temporal alterations between the different versions of the multimedia content, like frame addition and/or deletion and/or reordering.

Advantageously, the exploiting step comprises a step of clustering of the extracted audio fingerprints performed in each determined temporal matching period.

The step of clustering permits the elimination of outliers, i.e. frame locations that do not represent an actual matching between two actual periods in the versions of the multimedia content.

Preferably, the clustering step uses hierarchical clustering or k-means clustering.

Advantageously, the clustering step uses a modified hierarchical clustering in which a distance between two clusters is computed between boundary points of said clusters.

According to a particular embodiment of the invention, the versions of the multimedia content are different recordings of a video content captured by different cameras.

The invention further provides a synchronization device able to synchronize two versions of a multimedia content, each version comprising a plurality of video frames, said device comprising:
a) an extraction module for extracting audio fingerprints from each version of the multimedia content;
b) an analysis module for analyzing the extracted audio fingerprints in order to determine at least one temporal matching period between both versions;
c) an exploitation module for exploiting the determined temporal matching period to perform a mapping between the video frames of both versions.

Advantageously, the synchronization device is a communication terminal, particularly a smart-phone or a tablet or a set-top box.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

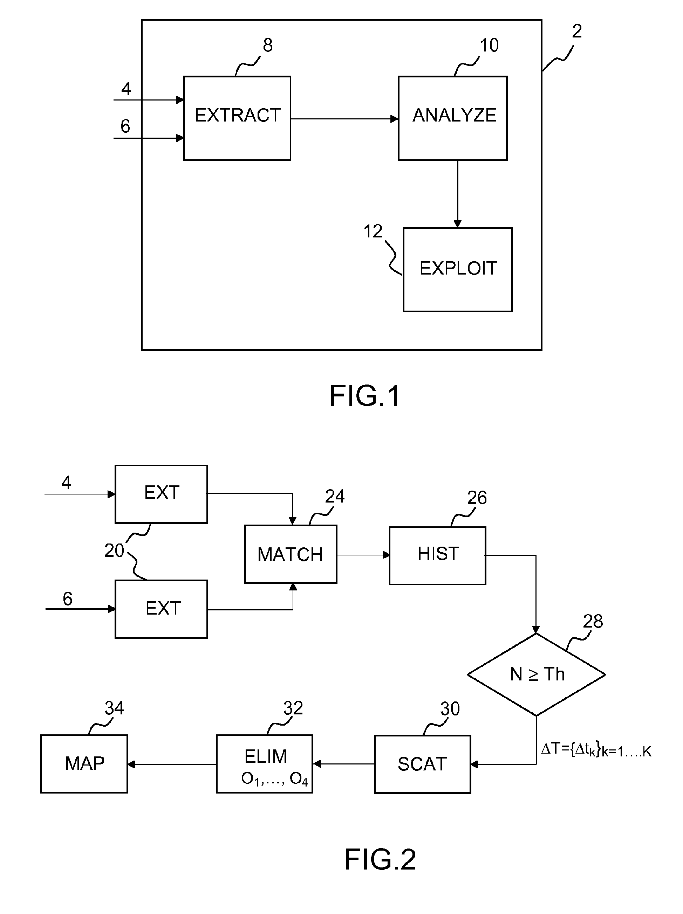

The invention thus provides a computer-readable program comprising computer-executable instructions to enable a computer to perform the method of the invention. The diagram of figure 2 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a synchronization device according to an embodiment of the present invention ;
- Figure 2 is a flowchart showing the steps of a synchronization method according to an embodiment of the present invention ;
- Figure 3 shows an example of extracted fingerprints represented in the time-frequency domain and obtained by the method of the invention ;
- Figure 4 shows an example of a scatterplot of matching fingerprints obtained by the method of the invention;
- Figure 5 is an example of a histogram computed by the method of the invention;
- Figure 6 shows the scatterplot of figure 4 filtered after thresholding of the histogram of Figure 5;
- Figure 7 shows the scatterplot of figure 6 wherein outliers are eliminated, in a case of frame addition and deletion; and
- Figure 8 shows another example of a filtered scatterplot wherein outliers are eliminated, in a case of frame reordering.

### DETAILED DESCRIPTION OF PREFERRED EMBODIMENTS

Referring to Figure 1, there is shown therein a schematic view of a synchronization device 2 according to a preferred embodiment of the invention.

The synchronization device 2 is preferably a communication terminal, particularly a smart-phone or a tablet or a set-top box. It may also consist in a personal computer, a laptop, or any other terminal containing a processor for processing data.

The synchronization device 2 of the present invention is able to synchronize two different versions 4, 6 of a multimedia content such as a movie. Each version 4, 6 comprises a plurality of video frames. The frames of the first version 4 generally correspond to the frames of the second version 6, except at least one frame which is deleted from the first version 4 and/or at least one frame which is added to the first version 4 and/or at least one frame which is reordered between the first version 4 and the second version 6.

Of course, the synchronization device 2 is able to synchronize more than two versions of the multimedia content by processing the plurality of versions in a pair-wise manner or by synchronizing each different version with a reference version of the movie.

The synchronization device 2 comprises an extraction module 8 for extracting audio fingerprints from each version 4, 6 of the multimedia content. The extraction module 8 receives as inputs either the entire video frames of both versions 4, 6 or only audio streams of the video frames of the versions 4, 6. In other words, it is not necessary that the whole audio or video content of said versions be present in the synchronization device as it is only necessary that the synchronization device accesses to the audio streams of the video frames of the versions 4, 6 to process them according to the present invention.

The synchronization device 2 further comprises an analysis module 10 for analyzing the extracted audio fingerprints in order to determine at least one matching period of time between both versions 4, 6.

Besides, the synchronization device 2 comprises an exploitation module 12 for exploiting the determined matching period of time to perform a mapping between the video frames of both versions. For example, this mapping can be used to transfer some metadata available in the first version into the second version where those metadata are absent.

The operations implemented by the modules 8, 10, 12 will be detailed in the following with reference to figure 2.

As shown on Figure 2, at a first step 20, audio fingerprints are extracted from each version 4, 6 of the multimedia content. More particularly, the audio fingerprints are landmark based audio fingerprints as defined in the paper of A. L. Wang, "An Industrial-Strength Audio Search Algorithm," Proc. Int. Sym. on Music Information Retrieval (ISMIR), pp. 1-4, 2003, related to the Shazam's algorithm.

The extraction of landmark based audio fingerprints at step 20 comprises a step of transforming time-domain audio signals of both versions 4, 6 into a time-frequency representation using short-time Fourier transform (STFT). When performing STFT, the extraction module 8 advantageously segments the audio signals into frames having a duration equal to the duration of a typical video frame rate, for instance equal to 16 ms or 32 ms or 64 ms or 40 ms. Preferably, the segmented audio frames correspond to the video frames that will be mapped by the exploitation module 12.

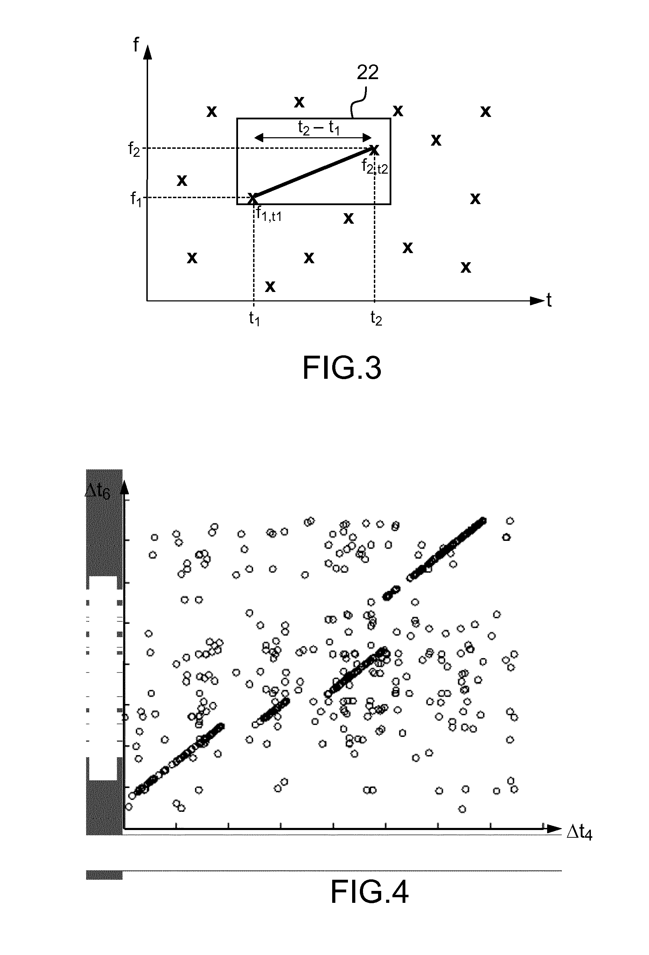

An example of this time-frequency representation of the extracted audio fingerprints is show in the graph of Figure 3. More exactly, in this graph, local energy peaks are derived from the spectrogram resulting from the STFT. Two local peaks in a target zone 22 of the time-frequency domain are paired to form a landmark (f_{1,t1}, f_{2,t2,} Δt)_{t1,,} where f_{i,ti} is a time-indexed frequency value, and Δt = t1-t2 is a difference in time offset between the two local peaks at t1 and t2. In the present description, according to a preferred embodiment, each extracted audio fingerprint is advantageously constituted by a landmark containing two frequency components plus the time difference between the points in the time-frequency domain like the represented landmark (f_{1,t1}, f_{2,t2,} Δt)ₜ₁.

At step 24, the landmark audio fingerprints extracted from the versions 4, 6 are compared to find a matching between them. Figure 4 represents an example of a scatterplot of all points of the matching landmarks. In this Figure 4, the abscissa (x-axis) represents the time offset in the first version 4 and the ordinate (y-axis) represents the time offset in the second version 6, the time offset of a version being the offset in time between the current time of the considered version and the time zero of said version.

At step 24, when a landmark (f_{1,t1}, f_{2,t2}, Δt)ₜ₁ matching between both versions 4, 6 is found, only the time offset t₁ and the difference of time offsets Δt (t2-t1) between the versions 4, 6 is stored.

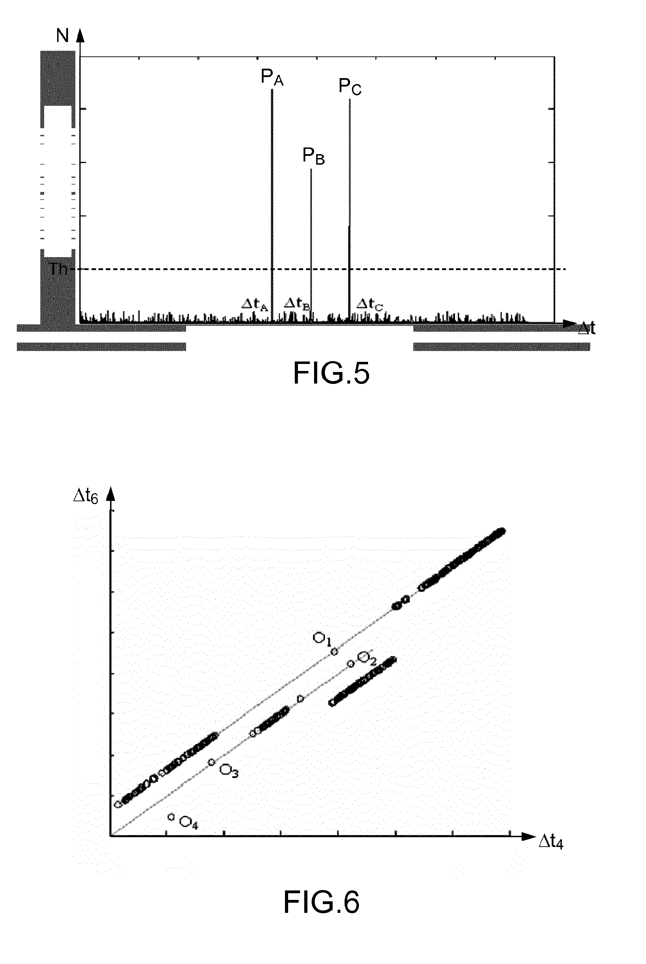

At step 26, the resulting differences of time offsets Δt of the matching landmarks are used to draw a histogram of the differences of time offsets. An example of such histogram is shown in Figure 5 where the x-axis represents the difference of time offsets between the versions 4, 6 and the y-axis represents the number of matching landmarks found at step 24 for each considered difference of time offsets.

Preferably, the above steps 20, 24, 26 of the synchronization method of the present invention use the Shazam's algorithm.

At step 28, the numbers of matches in the histogram of the difference of time offsets are compared with a threshold Th to identify maximum peaks. The threshold Th may be either heuristically chosen or learnt from training data. In the example of Figure 5, the identified maximum peaks are P_{A}, P_{B}, P_{C}. The difference of time offsets Δt_{A}, Δt_{B}, and Δt_{C} corresponding to these peaks are stored.

It is important to note that at this step, the Shazam's algorithm searches for only one maximum peak, as for example point P_{A} in Figure 5, to declare if two signals are matched or not. In the present invention, more than one peak is identified in order to enable the detection of temporal alterations between both versions of the multimedia content.

At step 30, the differences of time offsets corresponding to the peaks in the histogram identified at step 28 are exploited in order to generate a scatterplot of matching landmark locations as shown in the graph of Figure 6. As it clearly appears by comparing Figures 4 and 6, the scaterplot of Figure 6 is a filtered version of the scatterplot of Figure 4 after thresholding. This filtered scatterplot represents only the audio pieces of the versions 4, 6 which are considered to be matched. As shown in Figure 6, the corresponding time offsets appear in diagonals. Each diagonal of the scatterplot corresponds to a temporal matching period between the versions 4, 6.

The filtered scatterplot obtained at step 30 is however not optimal as it contains outliers, i.e. points that accidently lie in the diagonals but that do not represent an actual matching between the versions 4, 6 of the multimedia content. In the example scatterplot of Figure 6, these outliers are the points O_{1,} O_{2,} O_{3,} O₄.

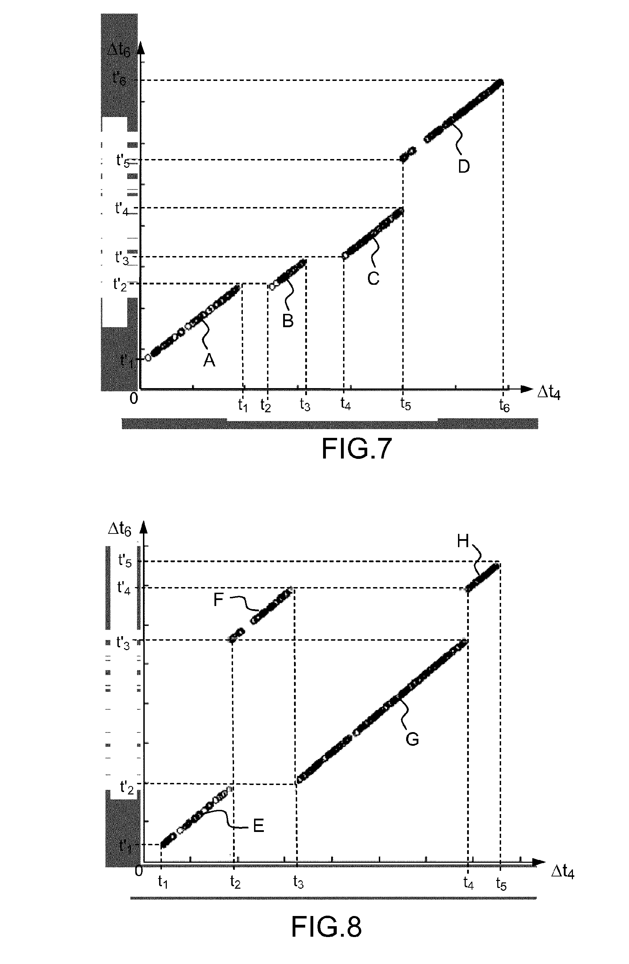

In a preferred embodiment of the invention, these outliers are eliminated at step 32 so that the resulting scatterplot, as shown in Figure 7, represents actual matching periods between audio pieces of both versions 4, 6.

In order to eliminate these outliers, step 32 comprises a step of clustering points lying in each diagonal of the scatterplot, for example by using a hierarchical clustering or a k-means algorithm.

A preferred implementation of a hierarchical clustering algorithm is considering first each point in a diagonal of the filtered scatterplot as a cluster containing a single item, then computing the Euclidean distance between each pair of clusters and merging the clusters having a distance smaller than a pre-defined threshold D. This "bottom up" process is repeated until either the distance between any pair of clusters is larger than D or only one cluster is remained. The remaining clusters with small number of points are considered to be outliers.

Contrarily to conventional hierarchical clustering algorithms, the distance between clusters is defined, in a preferred embodiment of the invention, as the minimum distance between their boundary points, i.e. the two points in each cluster having the lowest and the highest time offsets, instead of the distance between their centroids.

Then, at step 34, the obtained scatterplots are exploited to specify the positions of frame addition and/or deletion and/or reordering in order to perform a frame mapping between the video frames of both versions 4, 6.

In the example of Figure 7, four consecutive matching time periods A, B, C, D are identified in the scatterplot. The matching time period A is a segment comprised between 0 and t₁ along the x-axis and between t'₁ and t'₂ along the y-axis whereas the following matching time period B is a segment comprised between t₂ and t₃ along the x-axis and between t'₂ and t'₃ along the y-axis. As there's a "gap" between both matching periods A and B only along the x-axis, this clearly means that there's a frame deletion between t₁ and t₂ that has been performed from the first version 4 to the second version 6 of the multimedia content.

In the same manner, the matching time period B is a segment comprised between t₂ and t₃ along the x-axis and between t'₂ and t'₃ along the y-axis whereas the following matching time period C is a segment comprised between t₄ and t₅ along the x-axis and between t'₃ and t'₄ along the y-axis. As there's a "gap" between both matching periods B and C only along the x-axis, this clearly means that there's another frame deletion between t₃ and t₄ that has been performed from the first version 4 to the second version 6 of the multimedia content.

Similarly, the matching time period C is a segment comprised between t₄ and t₅ along the x-axis and between t'₃ and t'₄ along the y-axis whereas the following matching time period D is a segment comprised between t₅ and t₆ along the x-axis and between t'₅ and t'₆ along the y-axis. As there's a "gap" between both matching periods C and D only along the y-axis, this clearly means that there's a frame addition between t'₄ and t'₅ that has been performed in the second version 6 of the multimedia content.

After this detection of frame additions and/or deletions, the exploitation module 12 performs the video frame mapping between both versions by :
- mapping the segmented audio frames present between 0 and t₁ in the first version 4 with the segmented audio frames present between t'₁ and t'₂ in the second version 6;
- mapping the segmented audio frames present between t₂ and t₃ in the first version 4 with the segmented audio frames present between t'₂ and t'₃ in the second version 6;
- mapping the segmented audio frames present between t₄ and t₅ in the first version 4 with the segmented audio frames present between t'₃ and t'₄ in the second version 6;
- mapping the segmented audio frames present between t₅ and t₆ in the first version 4 with the segmented audio frames present between t'₅ and t'₆ in the second version 6.

Figure 8 represents another example of a scatterplot obtained after step 32. In this example, four consecutive matching time periods E, F, G, H are identified in the scatterplot. The matching time period E is a segment comprised between t₁ and t₂ along the x-axis and between t'₁ and t'₂ along the y-axis whereas the following matching time period F is a segment comprised between t₂ and t₃ along the x-axis and between t'₃ and t'₄ along the y-axis. Then, the matching time period G is a segment comprised between t₃ and t₄ along the x-axis and between t'₂ and t'₃ along the y-axis whereas the following matching time period H is a segment comprised between t₄ and t₅ along the x-axis and between t'₅ and t'₆ along the y-axis.

As there's a "gap" between matching periods E and G only along the x-axis and a "gap" between matching periods G and H only along the y-axis, this clearly means that there's a frame reordering by deleting a frame between t₂ and t₃ in the first version 4 and adding it between t'₃ and t'₄ in the second version 6.

After this detection of frame reordering, the exploitation module 12 performs the video frame mapping between both versions by :
- mapping the segmented audio frames present between t₁ and t₂ in the first version 4 with the segmented audio frames present between t'₁ and t'₂ in the second version 6;
- mapping the segmented audio frames present between t₂ and t₃ in the first version 4 with the video frames present between t'₃ and t'₄ in the second version 6;
- mapping the segmented audio frames present between t₃ and t₄ in the first version 4 with the video frames present between t'₂ and t'₃ in the second version 6;
- mapping the segmented audio frames present between t₄ and t₅ in the first version 4 with the video frames present between t'₄ and t'₅ in the second version 6.

Thus, the present invention remarkably insures a frame accurate synchronization between different versions of a multimedia content as it is able to detect any temporal alteration performed between the considered versions.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

Thus, even if the above description focused on the synchronization of multiple versions of a multimedia content like a movie, it can be advantageously applied to the synchronization of recordings captured by different cameras for either a personal or a professional use.

## Claims

1. Method for synchronizing two versions (4,6) of a multimedia content, each version (4,6) comprising a plurality of video frames, said method comprising steps of:
a) extracting (20) audio fingerprints from each version (4,6) of the multimedia content;
b) analyzing (24,26,28) the extracted audio fingerprints in order to determine at least one temporal matching period (A,B,C,D; E,F,G,H) between both versions (4,6);
c) exploiting (30,32) the determined temporal matching period (A,B,C,D; E,F,G,H) to perform a mapping (34) between the video frames of both versions (4,6).

2. Method of claim 1, wherein the extracting step (20) comprises a step of transforming time-domain audio signals of both versions (4,6) into a time-frequency representation.

3. Method of claim 2, wherein the step of transforming uses short-time Fourier transform, STFT.

4. Method of any of claims 1 to 3, wherein the analyzing step comprises a step of matching the extracted audio fingerprints of both versions (4,6) using Shazam's algorithm.

5. Method of claim 4, wherein the step of matching comprises a step of computing (26) a histogram representing a number of matches as a function of a difference of time offsets between both versions (4,6).

6. Method of claim 5, wherein the at least one temporal matching period (A,B,C,D; E,F,G,H) is determined using a thresholding (28) of the computed histogram.

7. Method of any of claims 1 to 6, wherein the exploiting step comprises a step of clustering (32) of the extracted audio fingerprints performed in each determined temporal matching period.

8. Method of claim 7, wherein the clustering step uses hierarchical clustering or k-means clustering.

9. Method of claim 7, wherein the clustering step uses a modified hierarchical clustering in which a distance between two clusters is computed between boundary points of said clusters.

10. Method of any of claims 1 to 9, wherein the versions of the multimedia content are different recordings of a video content captured by different cameras.

11. Synchronization device (2) able to synchronize two versions (4,6) of a multimedia content, each version (4,6) comprising a plurality of video frames, said device comprising:
a) an extraction module (8) for extracting audio fingerprints from each version (4,6) of the multimedia content;
b) an analysis module (10) for analyzing the extracted audio fingerprints in order to determine at least one temporal matching period (A,B,C,D; E,F,G,H) between both versions (4,6);
c) an exploitation module (12) for exploiting the determined temporal matching period (A,B,C,D; E,F,G,H) to perform a mapping between the video frames of both versions (4,6).

12. Synchronization device (2) of claim 11, wherein said device (2) is a communication terminal, particularly a smart-phone or a tablet or a set-top box.

13. A computer-readable program comprising computer-executable instructions to enable a computer to perform the method of any one of claims 1 to 10.
